# EUROPEAN PATENT APPLICATION

(11) **EP 4 764 900 A1**
(43) Date of publication of application: **24.06.2026**
(21) Application number: 24222264.4
(22) Date of filing: 20.12.2024
(51) Int. Cl.: G06F 16/908

(54) **A TERRITORY-BASED DIGITAL LIBRARY**

(71) Applicant: Genelec Oy, 74100 Iisalmi (FI)
(72) Inventor: NAGHIAN, Siamäk, 73100 Lapinlahti (FI)
(74) Representative: Laine IP Oy

(57) **Abstract**

There is provided a method for retrieving data from and/or uploading data to a digital library, wherein the digital library comprises storage including information. The method comprises receiving (701) a request including data, comparing (702) the received data with information comprised in or accessible to the storage in order to identify one or more matches, in case one or more match is found, identifying territory (703) for the matched data, and forming a territory map, setting indicators (704) to the territory map, wherein the indicators relate to information associated to the matched data and the identified territory, combining (705) the territory map with a geographical map, and forming (706) an interactive map including the geographical map, the territory map and the indicators.

## Description

### TECHNICAL FIELD

The present invention relates to a system for a territory-based digital library, maintaining and forming the system, a method for retrieving data from and uploading data to the system, use of the system, and a computer program product for performing the methods.

### BACKGROUND

Traditional libraries and their collections have been so far the main way of maintaining, for example, the global music contents. In traditional libraries the collections may be limited and accessible for limited number of people and local communities. Digitalization in music production, storage, distribution, consumption, and streaming have changed the landscape drastically.

US20230164206 discloses streaming, discovering and sharing geo-spatial media content. Digital music sharing, broadcasting, dissemination and sales have been integrated to a single software application on a communications device. An end user may access, distribute, broadcast and sell music across all platforms including live radio broadcasts. The user may decide upon geographical or cultural preference when seeking music.

### SUMMARY

Aim is to utilize digital technology to support global data library, for example for music data.

The invention is defined by the features of the independent claims. Some embodiments are defined in the dependent claims.

According to a first aspect, there is provided a method for uploading data to and/or retrieving data from a digital library, wherein the digital library comprises storage including information. The method comprises receiving a request including data; comparing the received data with information comprised in or accessible to the storage in order to identify one or more matches: in case one or more match is found, identifying territory for the matched data, and forming a territory map; setting indicators to the territory map, wherein the indicators relate to information associated to the matched data and the identified territory; combining the territory map with a geographical map; and forming an interactive map including the geographical map, the territory map and the indicators.

According to a second aspect, there is provided a system for a digital library, comprising a storage (108) comprising information, a receiver block (101) configured to receive a request including data, a match block (102) configured to compare the received data with information comprised in the storage (108) and/or accessible to the storage (108a) in order to identify one or more match, configured to identify a territory for the matched data, and to form a territory map including the matched data, an indicator block (106) configured to set indicators to the territory map, wherein indicators relate to information associated to the matched data and the identified territory, and a map block (110) configured to combine the territory map with a geographical map, and to form an interactive map including the geographical map, the territory map and the indicators.

A system according to the second aspect may be configured to retrieve data from and/or upload data to the digital library. The system may be configured to maintain and update the digital library.

According to various aspects, the system of the second aspect comprises a memory configured to store executable instructions and a processor configured to execute the executable instruction.

According to a third aspect, there is provided use of retrieving data from and/or for uploading data to a digital library.

According to a fourth aspect, there is provided a non-transitory computer readable medium having stored thereon a set of computer readable instructions, which upon execution by at least one processor, cause the system of the second aspect to perform the method of the first aspect.

According to a fifth aspect, there is provided a computer program comprising instructions which, when the program is executed by an apparatus, cause the apparatus to carry out method according to the first aspect.

### BRIEF DESCRIPTION OF THE DRAWINGS

In the following embodiments are discussed in more detail with reference to the attached drawings, of which:
Figure 1 illustrates, by way of an example, blocks of a system for a digital library.
Figure 2a illustrates, by way of an example, a system for a digital library.
Figure 2b illustrates, by way of an example, a user device.
Figure 3 illustrates, by way of an example, uploading data to the system.
Figure 4 illustrates, by way of an example, searching data from the system.
Figure 5 illustrates, by way of an example, an interactive map.
Figure 6 illustrates, by way of an example, matching data.
Figure 7 illustrates, by way of an example, a method for uploading data to the system.

Figures are presented as illustrative examples and embodiments may not be limited solely to the illustrated parts, but modifications may be made under the scope as defined in the claims. Figures that may not fully present the claimed invention, aim to provide better understanding on the context and relating technical field.

### DESCRIPTION OF EMBODIMENTS

There is provided a system for forming and maintaining a digital library, which is an online library and accessible to anyone. This enables making information available globally. In addition to retrieve or search data form the digital library, anyone is able to propose data to be uploaded and stored to the digital library. In order to ensure correctness of data, it is verified before acceptance to the digital library. After verified, data is associated to existing information in the digital library. The digital library enables to add verified data and to associate it with correct context and existing data of the digital library. A territory map for the data is formed, and the territory map is then matched to a geographical map. Data of the territory map is placed in the geographical map with indicators of data. The indicators may relate data items and their areal density, interest, relevance, and so on. The indicators may relate to data items, topics or attributes, at a relevant area. Data of the overlayed territory and geographical maps including indicators may be presented in an interactive map.

There is provided a digital library, which is territory-based. Depending on data and its contents, territory may be called cultural territory. The digital library comprises data collected from existing sources and data uploaded by users. The system is configured to form and maintain a digital library. The system is configured to retrieve data from the digital library and upload data to the digital library. Retrieve may correspond to (result of) search throughout this application.

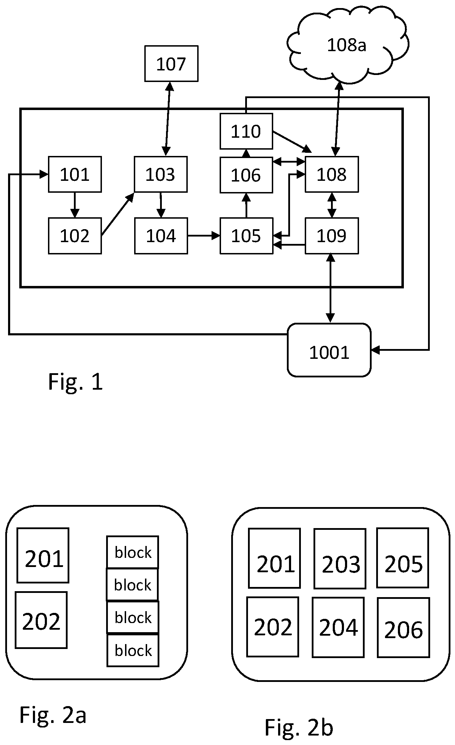

Fig. 1 illustrates, by way of an example, a system for a digital library. The system comprises a receiver block 101 configured to receive and/or retrieve data. Data may be received from a user, or retrieved from an external source, like a database or a cloud, for example. The system comprises an attribute block 102, which is configured to identify attributes of the uploaded data, which may be used as search criteria or for comparison. Thea attribute block 102 may identify attributes based on data origin, content, and/or the sender.

In case of uploading data, of which at least some portion, like its sender, content, or origin, cannot be verified to be trusted, a verification block 103 is used for verifying that the data is correct and/or the sender is accepted. The verification block 103 may compare the data and/or the sender to predefined trusted sources in order to verify those. The verification block 103 may request a verification from an external provider, source or part 107, or the verification block 103 may have access to an external block 107 referring to an external provider, source or part. The external block 107 may be arranged and maintained in cooperation with an institution or an organization having (approved) knowledge on the data. After a verification by the external part 107, data is forwarded to a classification block 104. In case the data is received from an accepted sender, for example from a known and trusted institution or organization, which have been approved to have knowledge on the data, like its contents, the verification block 103 is able to verify the accepted sender or data, and data is forwarded to classification block 104. Verification block 103 and/or external block 107 may utilize artificial intelligence, AI, and/or machine learning, ML.

Verification process may be arranged in the system. The system may recognize for example a sender or a type of data, or another attribute of data. Based on the sender, content and/or the type of data, it may be forwarded to a selected verification process. Verification process may include review by a block or a part, which is controlled by an institute, organization, or known specialists in the area. For example, researches investigating the area of data may be utilized. Verification process may include comparing the received data, or part of it, with existing data. If the received data, or the compared part of it, matches with existing data, the received data may be approved. There may be several verification processes of different level for different type of data, contents and/or senders. For example, data from an individual sender may be verified more thoroughly compared to data from a known source, or data found to relate and correspond to the existing data.

Classification block 104 may be configured to classify the data. Classification block 104 may be configured to assign data, or attributes of data, to a class, and/or to create classes. Data or attributes may belong to multiple different classes, and the classification block 104 may be configured to apply multi class classification. Classification block 104 may be configured to develop scheme of classes. Classification block 104 may utilize artificial intelligence, AI, and/or machine learning, ML.

After the data has been classified, it is forwarded to a match block 105, where inputted, optionally verified data is compared to the data stored to a storage 108 and/or accessible to the system 108a. In case no match is found in the match block 105, data may be stored to the storage 108, and /or to storage accessible to the system 108a, and result (no matches) may be returned. In case one or more matches are found in the match block 105, territory of the matched data is identified and the matched data is linked to its territory, for example on a territory map. Territory map proceeds to an indicator block 106. Indicators, being qualitative or quantitative information relating to the matched data and/or attributes, are provided in the indicator block 106. Indicators may relate to popularity, intensity, quality or other value or relation of data or its attributes, in accordance to the existing data that has been matched with the data/attributes. The indicator block 106 is configured to identify indicators and locate those to the territory map.

Territory map with indicators proceeds to a map block 110, where the territory map with indicators is combined with a geographical map, thus forming an interactive map. The interactive map may be stored to the storage(s) 108/108a, and presented to a user via a user device 1001, or to a requester via a requester device.

The matched data with its indicators it is stored to a storage 108, and/or to an external storage accessible by the system 108a. The storage 108 is presented as part of the system in Fig. 1. However, the storage block 108 may be at least partly distributed, for example located in an external server or a cloud service configured to store data.

The system comprises a search block 109 configured to search the classified, stored and/or accessible data. The search block 109 may comprise an AI and/or ML module, or utilize an external AI and/or ML module. The search block 109 may separate attributes, or search criteria from inputted request, and pass those to the match block 105, the indicator block 106 and the map block 110, which may return an interactive map to the user device 1001.

The system of Fig. 1, for example for causing receiving, identifying, verifying, classifying, storing and searching data, comprises a processor and a memory. Memory may store executable instructions which are configured to be executed with the processor. As illustrated in the previous, AI and/or ML modules may be utilized.

A user device 1001 may search stored data via its user interface. The user device 1001 comprises a communication device, which is configured to access the system, for example via internet or a communication network. The user device 1001 may search the stored data, which may be presented in the user device 1001. Presentation may comprise playing the data. A user device 1001 may be used to send an upload request to the receiver block 101 for uploading data to the system.

Fig. 2b illustrates, by way of an example, a system. The user device comprises a processor 201 and a memory 202. Memory may store executable instructions which are configured to be executed with the processor. The system may comprise at least one processor and at least one memory configured to store executable instructions configured to be executed with the processor. The system may comprise at least one processor and at least one memory storing instructions, which upon executed by the at least one processor cause performance of some or all blocks of Fig. 1. The system may be configured to receive data to be uploaded via or to the system. The system may comprise a platform. The system may be configured to search, investigate, identify, classify and process data. The system may be configured to provide access to an external source to search data stored in the external source. The system may further comprise a receiver and/or a transceiver configured to receive and transmit information or a connection block configured to arrange communication to other devices and/or entities.

The system configured to store data comprises a digital library. Many non-digital libraries store local information, like local studies, papers and publications, which are not available globally. The system is configured to collect and store locally existing data and enable availability of local data globally. Before storing data, it is verified to be correct. Any verified and/or trusted data, like publications accepted and/or reviewed by an authorized party, may be stored to the system and made available globally. Data may be collected from many sources. New data, for example a newly made song, may be uploaded to the system. Anyone may make a request to upload. Any uploaded data is verified in the system. This enables to ensure correctness of the data to be stored.

Fig. 2b illustrates, by way of an example, a user device. The user device comprises a processor 201 and a memory 202. Memory may store executable instructions which are configured to be executed with the processor. The user device comprises a receiver/transceiver block 203 configured to receive and transmit data from external entities, for example via a communication network. The user device is configured to connect to internet and/or local networks. The user device further comprises input/output tool 204, for example a touch screen. Alternatively, or in addition, the user device may comprise a display, a keyboard, specific keys and/or other corresponding input/output means. The user device comprises a loudspeaker 205 configured to output sound and/or music, and a microphone 206 configured to input sound and/or music.

A user device may comprise a communication device, for example a mobile phone, a smartphone, a computer, a laptop, a tablet, an entertainment system, and so on. A communication device comprises means to access to the system, for example via internet or communication network. The communication device may comprise a touch screen for inputting and presenting information. User interface may be a graphical user interface, GUI.

Data may relate to many kinds of material and topics. Data may relate, for example, to music, food, literature, biodiversity of nature and so on. Data is associated to its territory, and via that to its geographic location. This enables to collect and store data on a selected topic, like music or food, relating to its geographical location, and/or territory related thereto. Examples are presented with music data in order to provide better understanding on the system and its functions. Music data may comprise, in addition to songs and music files, information on songs, musical instruments, bands, vocalists, composers, arrangers, lyricists, sheet music, lyrics, organizations, culture, and other relating data. Data may relate to a heritage related to or preceding any of data. Data is placed on a territory map. A territory map is combined with a geographical map. The map establishes a territory for data, and/or indications for selected data items.

Territory map may provide data, like content, aspects and elements of a territory. Content may comprise both tangible and intangible matters that are found meaningful for elaborating the content. In addition to tangible contents, territory map may enable to make visible assets, stories, practices, relationships, memories, rituals, and so on. Anyone may make an upload request to the system for a digital library. This enables anyone to provide data to be stored and/or associated to an existing data, like territory map, attributes, and so on. Territory of data may not obey territories or borders of a geographical map. Mapping may comprise deep mapping including additional, for example layered, information; geographical mapping according to geographical area; asset mapping according to resources in a territory; counter mapping going beyond colonial ways and/or including data from minority or those, who would be traditionally ignored; and/or any other kind of mapping. A qualitative map data includes indicators in the form of a quality and may express a presence, an absence, an amount or a relative amount of a data on the qualitative map. Qualitative data may be non-numerical, descriptive and unstructured. It may be illustrated via colours or alike markers in an interactive map. A qualitative geographic information system, GIS, including non-quantitative data may be involved for creating indicators and/or the interactive map. GIS facilitates integration of qualitive data collection and analysis with quantitative spatial analysis.

Bottom-up type of data collecting enables to collect data widely and independently of initial source of data. This enables to make an extensive and comprehensive data collection for global use. Since anyone is able to propose data to be stored to the system, or make an upload request, a received data (of the upload request) is verified or validated before it is accepted to be uploaded and/or stored. This is done to ensure that the data is correct and can be trusted. Data is globally usable to anyone interested, like for investigators and researches. On the other way around, researches, or anyone else, may make a request to update the stored data based on their knowledge. Verification of data may be made with aid of selected parties, like institutions and/or authorities. For example, one party involved could be the United Nations Educational, Scientific and Cultural Organization, UNESCO. The parties, like institutions and authorities, may have indirect effect on verifications, for example by making provisions, rules and/or validating parties which are used for validation, or prioritizing such.

Stored music data may be utilized professionally by local music institutes, lead musicians, ambassadors, and global music students may utilize the system. Music data, as well as food and many others, may also have popular interest. The verified parties, like music institutes and alike, may be verified to be used as parties of the verifying process. The verified parties may implement, initiate and/or complement classification.

Data to be stored to, or searched from, the system may be classified. Data may be un-structured or less structured. Classification generally assigns data to one or more class, and may provide class attributes to data. Initial identification of received data may be based on a location the data received from or connected to. Also, an upload request may include an initial classification, to which the proposed data belongs to. Any uploader may then make an initial classification. This may be a geographical area, an ethic group, a genre, an object, like a musical instrument or alike. Used classification schema may be formed, at least partly, by parties verifying and/or certifying uploaded data.

Class may include a category, a type, species, a concept, taxon, a group, an identification and/or a division, for example. Classification may comprise assigning data to a pre-existing class, or it may comprise both classification and creation of classes. Typically, the uploaded data belongs to several, or more than one or two, classes, so multiclass classification is applied. Development of a scheme of classes and creation of classes may be implemented with aid of artificial intelligence, AI. Any new data may be classified, or a new class created for such, with aid of AI based machine learning, ML, system. ML may enable to find and classify for example incorporated meaningful symbolic elements, for example diversities or historic objects. The classification enables data to be associated with other information, like information already identified, accessible, stored, or existing in the storage.

Data structure may include databases, linked lists or any other suitable data structure. A geographic location, for example of data or territory, may be configured to form an entity, to which other relating data is linked. Data structure may be a collection of data values, relations among them, and functions or operations that can be applied to the data. Data structure enables to manage large amount of data to be used, for example, by a large database. Data structures enable to fetch data distributed to one or more storages.

A received, verified and optionally classified data may be collected, recorded, analysed, combined and/or associated to an existing information. The data is further mapped to a territory map. Data may describe resources, networks, links, patterns, usages, etc, of a given group and/or at a given territory. Territory mapping may enable ongoing monitoring and assessment of possible updates in any of the related matters.

A territory map comprises variety of data associated to its territory. The territory map is combined with a geographical map. This way territories, to which data relates to, are visible at a geographical map, at their geographical location(s). Geographic location may comprise a continent, a country, a state, a city, a village, a postal code, a region, and/or a place on a world map. Geographic location may be realized by a Global Positioning System, GPS, or alike satellite navigation systems. Geographic location is converted to an agreed form. Geographic location may be converted to latitude, longitude and height relative to an ellipsoidal Earth model. Territory may comprise an area, which may not follow country borders, but extend over those, or leave parts of a country out from the territory. Territory may comprise several areas, which may have common parts, be geographically connected or disconnected (separate) from one another.

Music data may include information of a musical instrument, history of such, like who invented it and how it developed, how/where it spread, and so on. In addition, data may include famous players, different versions of the musical instrument, kind of music that has been played, and so on. Evolution of the musical instrument and music played with it may be stored. Samples of music played with the instrument may be stored. Alternatively, data may relate to a food culture, recipes, development, cooking methods and tools, on certain areas. Variety of data may be uploaded, stored and used correspondingly.

Search tool is used to search data stored to the storage. Search tool enables anyone to achieve confirmed data on stored topics, matters and their evolution. Search tool may utilize artificial intelligence, AI, for searching and comparing data. Data searches may be based on classification of stored data, territory of data, origin of data, and any alike categories. This enables to search not just stored data, but evolution of the data and/or similarities/differences of data/evolution in different geographical locations. Search tool, like AI, has access to all data stored in the system. Search tool enables to compare for example Christmas food traditions in different countries, when data on foods and associated cultures is stored or available to the system. As another example, based on a music sample as an input, search tool is able to find the musical instrument, which was used for playing, and further information about the musical instrument, like its historical, location and distribution territories.

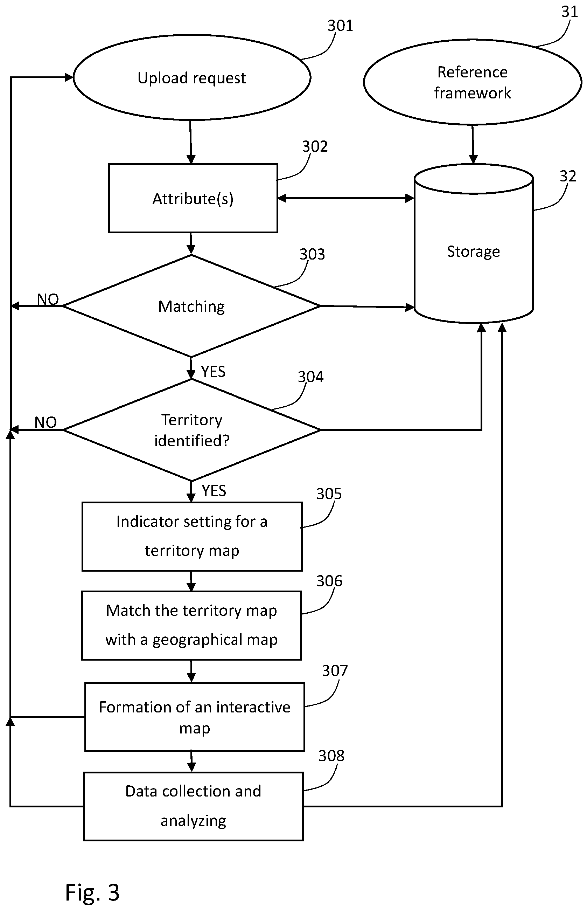

Figure 3 illustrates, by way of an example, uploading data to the system. In a phase 301, an upload request is received. The upload request comprises data, which is proposed to be stored to the system. In case of a musical database, the upload request may comprise at least one of music, voice, phrase sample, instrument, music data, etc. Further, the upload request may include at least some classification of data. In a phase 302, at least one attribute is detected, extracted and/or separated from the upload request. The upload request may comprise classification data, or an initial classification, which may be used as an attribute or part of it. Data included in, or attached to, the upload request may be reviewed in order to identify and/or extract attributes, or the data may be used as an attribute. Attribute may comprise a name of an instrument, which is classified as instruments or devices. Multiple attributes may be used. In addition to the name of the instrument, voice data of the instrument may be comprised in the upload data. The voice data may be classified as an audio data and used as an attribute. In a simple form, the upload request forms an attribute. An example of a criteria may be an uploaded audio. Music genre may be an attribute, which is determined based on the uploaded data, attribute formed by the uploaded data and/or classification of the uploaded data. One or more attributes, which may be called search criteria, are stored in the storage 32.

Storage 32 may be a database or any other central or distributed memory configured to store data. Storage 32 may comprise information and contents that have been uploaded and verified by qualified parties. Storage 32 may comprise part of the information, while associated information may be distributed and/or stored in other storages, like one or more database, cloud, or any other storage. Storage 32 has access to the associated data. For example, the storage 32 may comprise links to remote information and storages of such. The storage 32 may comprise, for example, music genres and their music scales, patterns, phrases, language, vocal, instruments, history, geographical territories, and so on. Music genre may be determined or matched based on data stored in the storage 32, for example by comparing uploaded data, attribute(s) and/or classification of such to the stored data. Storage 32, or other storages may comprise data in an agreed form or frame, including a selected structure, samples and so on. This enables to compare received attributes with the existing data frame.

In a phase 303, search criteria (corresponding to the one or more attributes) are matched with existing information at the storage 32. Classification may be utilized for matching. The matching may be implemented in an agreed way, for example in accordance to agreed rules, models, or alike. These may be part of a reference framework 31. The reference framework 31 may include references, agreed ways and/or standards for matching, which may be stored and maintained with aid of authorised and/or verified information. The reference framework 31 for matching may be stored to the storage 32, or to a separate location. The reference framework 31 may be updated and maintained independently from the storage 32. The reference framework 31 may be used as basis for comparing the existing and received (to be uploaded) information. In addition, the reference framework 31 may be used to teach artificial intelligence, AI, or machine learning, ML. The reference framework 13 may comprise conceptual matters, for example serving as a support or guide for expanding terms or contents or alike, and/or for teaching AI or ML. Standard for matching may comprise instructions, preferred ways or items, norm measures or models for comparative evaluations.

In case no match is found in the phase 303, process is returned to the upload request phase 301. More information may be requested in order to enable matching. In addition, unsuccessful match is stored in the storage 32. This may be used for detecting similar cases and/or for teaching AI or ML. For example, one or more attributes in the phase 302 may get feedback from unsuccessful matches of the phase 303, and utilize the feedback to develop ways for preparing, extracting, using and/or interpreting attributes in question. If the match is found in the phase 303, process proceeds to a phase 304, including territory identification for the data. At this phase 304, data, its classification and/or attribute(s) may be utilized. Territory identification in the phase 304 is implemented by comparing data matched in the phase 303 with existing information in the storage 32. Territory may comprise any kind of indication on the corresponding geographical area. Territory is a geographical area bounded according to at least one of data, classification and attribute(s) of data. Territory is not necessarily limited to country or state boarders, or alike existing geographical areas. Territory comprises geographical information of the matched data. In case territory is not identified in the phase 304, process returns back to upload request phase 301 and stores the matched data to the storage 32. The stored data may be used for detecting similar cases and/or teaching AI or ML. If the territory is identified in a phase 304, process proceeds to a phase 305, where one or more indicators are set for a territory map. The territory may comprise several places or spots, or separate areas, which may be of different sizes. The one or more indicators may comprise indicators describing, for example, density, availability, quantity and/or volume of data at the one or more identified territories. The one or more indicators are set at the relevant, identified territories in a phase 305. After one or more indicators are set to the territory map, the territory map is matched with a geographical map in a phase 306. This enables to visualize territory map at a geographical map. Since the territory map already includes variety of different kind of information, the territory map may be seen to provide another layer of information to the geographical map.

Based on the matched territory and geographical maps, an interactive geographical territory map is formed in a phase 307. The map may include geographical map, overlayed with a territory data of the identified territory, and indicators on data relevance, volume, density, or alike linked to one or more territories. The formed interactive map is provided to upload device or to a user who uploaded the request in the phase 301. The interactive map may be returned to the upload device, where it may be presented, for example to be viewed by the uploader party. In addition, the uploaded data and thereby updated information are collected and analysed in a phase 308. This data is linked to previously existing information, and stored in the storage 32 and provided to the phase 301, for example returned to the upload device.

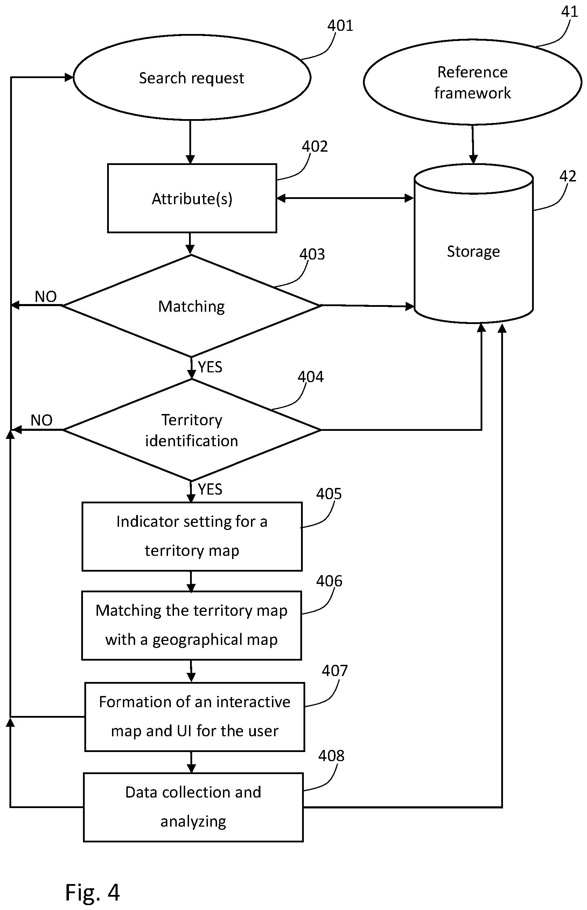

Figure 4 illustrates, by way of an example, searching data from the system. In a phase 401, a search request is received. A search request comprises a search item, which may be in form a written text, an image, sound, or alike. In the phase 402, one or more attributes are extracted or separated from the search item, or the search item may be used as an attribute. Multiple attributes may be used. The one or more attributes are stored in the storage 42. Storage 42 corresponds to storage 32 illustrated with Fig. 3.

Matching, in a phase 403, compares search criteria, corresponding to one or more attributes, with existing information in the storage 42. Reference framework 41 for matching may be stored and maintained using authorised or verified information, as illustrated with Fig. 3 (reference number 31). In case no match is found in the phase 403, process is returned to request in the phase 401. More information may be requested in order to enable matching. In addition, unsuccessful match is stored in the storage 42. This may be used for detecting similar cases and/or teaching AI or ML. If the match is found in the phase 403, process proceeds to a phase 404, including territory identification. Territory identification in the phase 404 is implemented by comparing the matched data with existing information in the storage 42. Territory may comprise any kind of indication on the corresponding geographical area, and is not necessarily limited to country or state boarders, or alike geographical areas. Territory comprises geographical information of the matched data. In case territory is not identified in the phase 404, process returns back to upload request in the phase 401, where the situation is informed and additional information may be requested, and the matched data (lacking territory information) is stored to the storage 42. If the territory is identified in the phase 404, process proceeds to a phase 405, where one or more indicators are set for a territory map. The territory may comprise several places, spots, enclaves and/or areas, which may be of different sizes. The one or more indicators may comprise indicators describing, for example, density, availability, quantity and/or volume of data or attributes at the one or more identified places, spots, enclaves, areas, sub-areas of those, or alike. The one or more indicators are set at relevant, identified territories, in the phase 405. After the indicator is set to the territory map, the territory map is matched with a geographical map in a phase 406. This enables to visualize territory map in a geographical map. Since the territory map already includes variety of different kind of information, the geographical map may be seen to provide a layer of information to which the territory map including one or more indicators is overlayed.

Based on the matched territory and geographical maps, an interactive territory map is formed in a phase 407. The map may include geographical map, overlayed with data territory and indicators describing data relevance, volume, density, or alike information on data, at the corresponding territories. The formed interactive map is provided in the phase 401, where it may be presented via a device providing the request. In addition, data of the request and thereby updated information are collected and analysed in a phase 408. This data is linked to previously existing information accordingly, stored in the storage 42 and provided to the phase 401, for the device providing the request.

As an example, a request for search may include a question; "what is the music tradition in north of Finland?" which is submitted to the system via a user interface. Search tool, e.g., an AI engine, of the system may detect attributes for search criteria, which may be formed as "music tradition" and "north of Finland". The system may perform (search) criteria comparison in order to match the (search) criteria to stored information and a location-based search in order to identify territory of north of Finland, e.g., as Lapland. The territory map is matched with a geographical map and as a return, an interactive map.

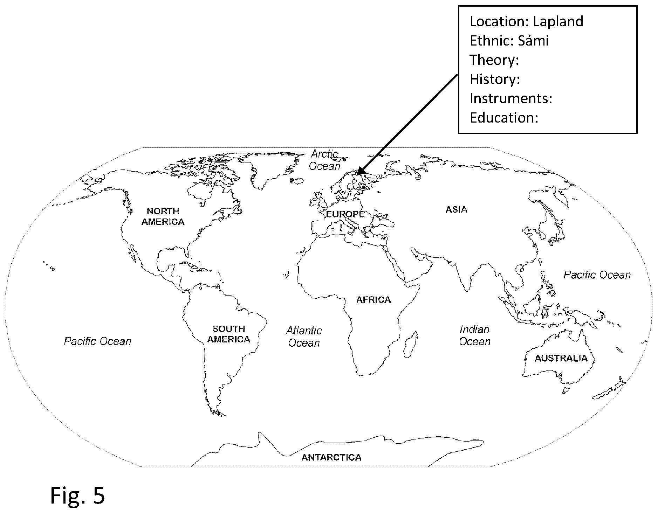

Fig. 5 presents, by way of an example, an interactive map. It may comprise colour indication of one or more territories in question. Intensity of colour(s) may correspond to amount, popularity, importance, or other quantity of searched attribute in question. Other information or links to such may be provided in a separate window, or next to the one or more territory. Links enable to search further information on a selected subject relating to the search results. For example, history, audio samples, information on instruments, players, compositors, and alike may be provided in the interactive map.

A software or a web application may be used as a user interface in order to access the system and data stored and used therein. A user interface may present an interactive map view, via which an area or point of interest may be selected. Based on an interesting field, as searched, for example certain music style, or a musical instrument, the map may present interesting territories or geographical areas using e.g., colours and/or tone value of colours. Colours or tone value of colours on a presented map change in response to searched context or information. Deep or strong colour may represent area of interest of a searched data, while areas having less or no information relating to the searched data may be presented in mood colours and/or tones. When user searches information via a user interface, UI, GUI, colours on an interactive map view provide to the user one or more indicators on the searched information. The user may search based on geographical or content information. An interactive map view may present coloured regions as indicators for origin, popularity, importance, role of the searched data, and so on, using different colours and/or intensity of the colour(s).

In addition to the map view and colours, a new window including requested data and data linked thereto may open. Additional data may be presented in a new window. For example, a figure of a related instrument and information relating to such may be provided via a new window, which may be a pop-up window. New windows may comprise multiple links to further information on selected topic, and/or multiple presented or selectable windows may present additional information on searched data.

As another example, a request for search may include a question; "where is origin of Sámi music?" which is submitted to the system via a user interface. Search tool, e.g., an AI engine, of the system may detect attributes for search criteria, which may be formed as "Sámi music" and "origin". The system may perform (search) criteria comparison in order to match the (search) criteria to stored information and location-based searching in order to identify territory of the origin for the Sámi music. The territory map is matched with a geographical map. As a return, there is presented a map view, which emphasizes part of northern Finland (Lapland), Sweden and Norway as a territory, and may provide information on history of the music, genres of Sámi music, link to a theory, or alike further information, and so on. The map view may comprise an interactive map, which presents geographical territory of data (search criteria) with indicators on found additional information. The map view, or the interactive map, may be provided on one or more new windows.

As another example, a question "in which ethnic music region this instrument is played" is submitted to the system with sound sample of the instrument. Search tool or search engine of the system may make matching comparison with existing data on both text data and a sound sample. Matches comprise information matching to both criteria: text and sound. Text may be matched first, and if match is found the sound sample may be used as second (search) criteria. This may be other way around, depending on used and agreed framework, models, references, and so on. In case one or more matches are found, territory identification is implemented. After territory is identified, and corresponding indicators are set the territory map, the territory map is matched with a geographical map and an interactive map is formed. As a return, a view of the interactive map shows detected parts of origin country and other areas, music data and indicators illustrating occurrence of the data in the interactive map. Different indicators may be illustrated in the interactive map using colours, symbols and/or other markings. For example, intensity of colours in the response map may be based on density, volume, existence, popularity, importance, role of data, and so on. The recognized instrument and data relating to it may be presented in the map including interactive indicators on a geographical map, areas of interest and information on the recognized instrument, for example. After the interactive map is provided, a further question may be asked (by the request device). For example, a further request may be on the most known artists now and earlier; or differences and similarities of ethnic music among the detected territories. The further request may include a certain time period, or areas of interest, or alike further requests, which are used to from criteria. In response, a search tool may be configured to compare criteria formed of the further request with the previous (search) criteria or to the stored data, and/or to take into account the previous results in the interactive map. In addition to text search, location- and sound-based searches are made as in previous. As a response the found geographical areas of the artists are emphasized in the map. Names of the artists, with optionally other information, may be presented in a separate window. Instead of music data, as discussed the previous, similarly request data may relate to Christmas dishes and comparison of such, where used, and so on; or to literature on biodiversity, in order to find countries and writers producing such, and/or compare findings further. The data may relate to biodiversity and nature, like animals and species, where request may relate to existence of deers, for example.

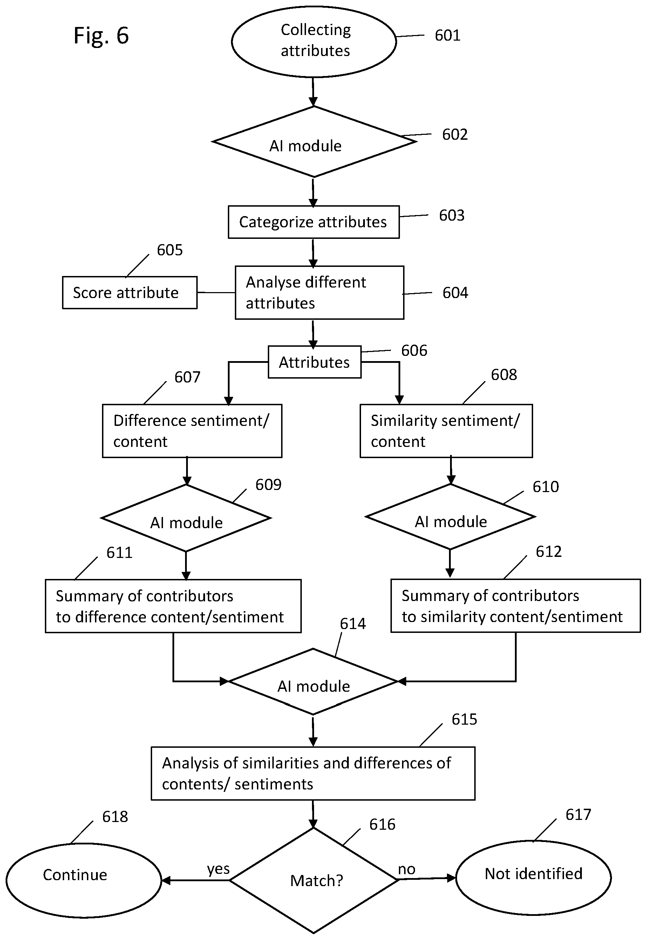

Figure 6 illustrates, by way of an example, matching data. This is implemented in a matching phase (303 of Fig. 3, 403 of Fig. 4), after attributes for search criteria have been determined based on data of a request. Reference frame of Figs. 3 and 4 provides structures for data, like text, audio, image and samples, of subjects, like music. In matching phase, inputted attributes are compared to the information stored or accessible to the database. This enables to find out whether the attributes fulfil features of corresponding data as saved or fetched. Stored and fetched information, which is used for comparison, is qualified to be correct and correctly categorized, before it is used.

Collecting in a phase 601 comprises collecting or uploading corresponding attributes from data sources based on data (attributes) of a request, which has been inputted or uploaded to the system. Data of the request may comprise raw inputs, for example an uploaded music sample. Data sources may include storages, distributed memories, websites, forums, internet, etc. A scarper may utilize AI or ML, and natural language processing to extract data from data sources and to provide structured data. Data sources may be scraped programmatically using tailored implementations, for example with Python library. Each source data may be collected, stored and labelled individually. For example, collected music data may be stored according to the following schema:
source_url: URL of web page form which data was scraped, where url is universal source locator
date_scraped: date of data extraction
source_name: name of the source, for example "Wikidata, Wikimedia"
text_content: raw text content scraped from the data source
media_content: raw media content scraped from the data source or based on the uploaded contents
music_id: generated unique identifier for the media content item

Other than music data may be stored correspondingly, using the same, similar or amended schema.

Collected attributes may be detected using an AI module in a phase 602. The AI module may structure raw data and media contents such that those may be used in downstream analysis, following the phase 602 in Fig. 6. Phase 602 may be called a high level labelling or grouping.

The attributes are categorized in the phase 603. The attributes may be categorized based on predefined function and/or theoretical categories. Categorization enables to analyse and group attributes belonging to a certain category of same or similar features. The categorized attributes are analysed in a phase 604. Analysis may comprise analysis of different attributes, for example musical attributes, like music patterns, scales, melody, genre, regional identifier, etc. Comparison is made between inputted data attributes, and existing or fetched (scraped) data.

The AI module may be instructed to freely detect, name and attach a sentiment, upon detecting such, to any of the detected attributes. AI may detect sentiments from any kind of content or data, like text or media data. Sentiment analysis, which may be referred to opinion mining, is a process for detecting subjective attitudes, opinions and feelings in data using natural language processing, NLP, machine learning, ML, and/or artificial intelligence, AI. Sentiment analysis uses text and models in order to automatically analyse data and/or data contents. Advanced sentiment analysis may identify precise emotions like anger, sarcasm, confidence or frustration, instead of just determining whether data is positive, negative or neutral. For example, music may be detected to have sentiment of melancholy, humorous, joyful, and so on. Sentiment analysis may be performed to a type of data, or general nominator of the data, class of data, and/or to data attributes. Sentiment analysis may be directed to any type of data, like text, audio, image data, and so on.

Structured data may be stored in the following schema:
data_type: type of data as interpreted by the language model, which may correspond to interpretation of a musician, a professional, an enthusiast, for example
overall_sentiment: overall sentiment towards a producer or its products, for example negative (-1), neutral (0), positive (+1)
overall_sentiment description: AI module description of the overall sentiment and its main contributors
attribute_type: type of the attribute
attribute_name: name of the evaluated attribute
attribute_description: AI module generated description of the attribute
attribute_sentiment: sentiment towards the attribute from the point of view of music identifier, for example negative (-1), neutral (0), positive (+1)
source_name: name of the source form which the data was scraped
data_id: identifier for the data excerpt

In addition to analysis in the phase 604, the attributes and/or sentiments may be scored in the phase 605. A score of an attribute may provide its placement in view of a score of its one or more categories. The score may illustrate a sentiment or an attribute in relation to corresponding average sentiment/attribute of the category. Attribute categories may be scored by averaging data across the data sources and documents. Data sources may include music patterns, regional identifiers, instruments, samples, figures, video, and so on.

After analysis, at least some attributes have a score, and a sentiment content, and the attributes proceed to a phase 606, where the attributes are divided by their contents and/or sentiments. The sentiments and/or contents of attributes are compared to corresponding existing data, as stored, accessible and/or fetched. The attributes having similarities in their sentiment and/or content are moved to a phase 608, and the attributes having difference in their sentiment and/or content are moved to a phase 607. The attributes having similar sentiments and/or contents at the phase 608 are inputted to an AI module to a phase 610. The attributes having different sentiments and/or contents at the phase 607 are inputted to an AI module to a phase 609. The AI module (phases 609, 610) are configured to process the inputted attributes. AI module of phase 609 is configured to provide (output) a summary of contributors to differences of contents and/or sentiments linked to the attributes to a phase 611. AI module at the phase 610 is configured to provide (output) a summary of contributors to similarity of contents and/or sentiment linked to the attributes to a phase 612. This may involve large language models, allowing use of one or more language models for different purposes by instructing those in natural language, like prompting. The AI modules at phases 609 and 610 output summary of contributors to similarities/differences, which are linked to the attributes, like music attributes. Contributors may include sum of scores of the phase 605, and/or indication on amounts of similarities/differences accordingly. AI modules at phases 609, 610 may learn, for example weights of contributors, from inputted content. Summary of contributors to the differences of contents/sentiments at the phase 611 and summary of contributors to the similarities of contents/sentiments at the phase 612 are inputted to an AI module to a phase 614. The AI module at the phase 614 is configured to analyse the inputted similarities and differences for selected attributes. Summary of similarities and differences sentiments (from AI modules 611, 612) may be summarized at the AI module at the phase 614. In a simple form, AI module at the phase 614 analyses and summarizes contents, contributors, and/or sentiments, for example by values for positive (+), negative (0) and neutral (-) sentiments. More advanced sentiments or value ranges may be used, analysed and summarised. A score attributes from the phase 605 may be used for comparing attributes stated in the input request with corresponding attributes observed from existing/accessible data. Based on the summarized similarities and differences at the phase 615, which are outputted by the AI module of the phase 614, and are found to match between the stated (at input request phase) attributes and observed (from searched data/database) attributes, decision on match is done at a phase 616. If match is found at the phase 616, the process continues to a phase 618, as after accepted matching phase of Figs. 3 and/or 4, to a territory identification phase (304, 404). Finally, accepted match is indicated in the interactive map. If match is not found at the phase 616, the process continues to a phase 617, as after rejected matching phase of Figs. 3 and/or 4, where data is stored to a database (31, 41), and process is returned to a request phase (301, 401).

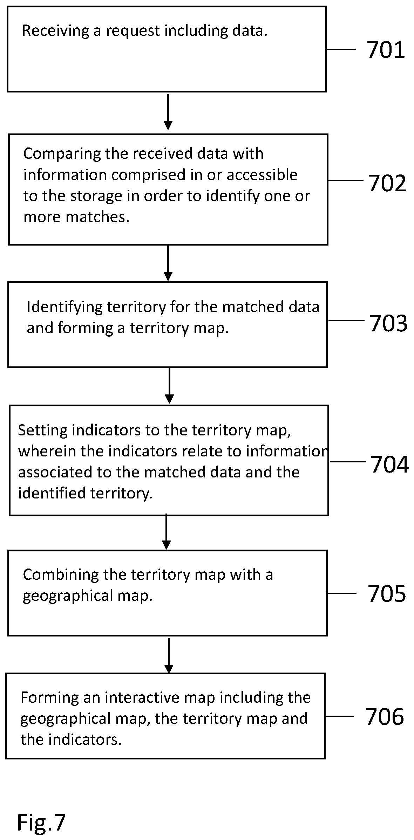

Figure 7 illustrates, by way of an example, a method for loading data to a digital library. The method comprises receiving, at a phase 701, a request to upload data to the digital library. The request includes data. The method comprises comparing, at a phase 702, the received data with information comprised in or accessible to the storage in order to identify one or more matches. In case a match is found, the method comprises identifying, at a phase 703, territory for the received data and forming a territory map. The method comprises setting, in a phase 704, indictors to the territory map, wherein the indicators relate to information associated to the received data, and/or attributes of it, and the identified territory. The method comprises combining, at a phase 705, the territory map with a corresponding geographical map, and forming, at a phase 706, an interactive map including the geographical map, the territory map and the indicators.

In the previous description and figures there is provided a system for collecting historically and/or topically relevant information, which may not even be digitized yet. The collection may be elaborated by anyone. At the same time, the stored information is verified by authorised parties in order to ensure correctness of stored data. This makes data reliable, increasing its usability. The data, or digital library, is accessible by anyone. This enhances spreading of correct information, which might otherwise be accessible to a certain region or group only. A digital library may comprise data on any selected items and topics.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

The described features, structures, or characteristics may be combined in any suitable manner in one or more embodiments. In the previous description, numerous specific details are provided, such as examples of data, criteria, etc., to provide a thorough understanding of embodiments of the invention. One skilled in the relevant art will recognize, however, that the invention can be practiced without one or more of the specific details, or with other methods, components, data, etc. In other instances, well-known structures, data, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. A method for retrieving data from and/or uploading data to a digital library, wherein the digital library comprises storage including information, the method comprising
- receiving (701) a request including data,
- comparing (702) the received data with information comprised in or accessible to the storage in order to identify one or more matches,
- identifying territory (703) for the matched data, and forming a territory map,
- setting indicators (704) to the territory map, wherein the indicators relate to information associated to the matched data and the identified territory,
- combining (705) the territory map with a geographical map, and
- forming (706) an interactive map including the geographical map, the territory map and the indicators.

2. A method according to any of the previous claims, wherein the request includes data in form of text, sound, image, video, music, message, scanned data, or a combination of such.

3. A method according to any of the previous claims, comprising identifying attributes from data of the request and using the attributes for comparison and matching.

4. A method according to any of the previous claims, wherein the request comprising request to upload data, and comprising verifying correctness of data, before comparing data with the information comprised in or accessible to the storage.

5. A method according to the previous claim 3, wherein the received data is verified based on at least one of: data contents, data origin, data location, data attributes, sender of the data.

6. A method according to the previous claim 3 or 4, wherein the received data is verified according to at least one of: predefined rules, models, references, frame, and standards, which are stored in the storage and/or accessible via the storage.

7. A method according to any of the previous claims, further comprising classifying data and/or its attributes using one or more classifications, before comparing data and/or its attributes with the information stored in the storage or accessible to it, wherein the data and the stored information are classified according to the same or similar one or more classifications.

8. A method according to any of the previous claims, wherein territory comprises areas, enclaves or points of relevance to data and/or its attributes.

9. A method according to any of the previous claims, wherein indicators comprise at least one of: qualitative information, quantitative information, popularity, intensity, density, availability, quantity and volume relating to the matched data and/or its attributes at the one or more of their identified territories.

10. A method according to any of the previous claims, comprising scarping sentiment data comprising at least one of: text, audio, image, video, structured and unstructured data associated to the matched data and/or attributes.

11. A method according to any of the previous claims, comprising analysing attributes of the inputted data, identifying similarities and differences of the content and/or sentiment data of attributes, and deciding on match based on analysis of similarities and differences of the contents and/or sentiment data of the attributes.

12. A method according to any of the previous claims, wherein at least one or more of the following: the received data; results on match; matched results; results on territory identification; territory map; indicators associated to the attributes and/or to their territory; and interactive map are stored, and configured to be processed by and/or train at least one of the following tools: a tool for searching data, a tool for scarping data, a tool for comparing data, a tool for matching data, a tool for identifying one or more territories, a tool for forming a territory map, a tool for setting indicators, a tool for combining territory map with a geographical map and a tool for forming an interactive map.

13. A method according to the previous claim 12, wherein at least some of the tools comprise artificial intelligence and/or machine learning.

14. A system for a digital library, comprising
- a storage (108) comprising information,
- a receiver block (101) configured to receive a request including data,
- a match block (102) configured to compare the received data with information comprised in the storage (108) and/or accessible to the storage (108a) in order to identify one or more match, configured to identify a territory for the matched data, and to form a territory map including the matched data,
- an indicator block (106) configured to set indicators to the territory map, wherein indicators relate to information associated to the matched data and the identified territory, and
- a map block (110) configured to combine the territory map with a geographical map, and to form an interactive map including the geographical map, the territory map and the indicators.

15. A computer program comprising instructions which, when the program is executed by an apparatus, cause the apparatus to carry out the method according to any of the claims 1-13.
